# EUROPÄISCHE PATENTSCHRIFT

(11) **EP 3 666 414 B1**
(45) Veröffentlichungstag und Bekanntmachung des Hinweises auf die Patenterteilung: **27.07.2022**
(21) Anmeldenummer: 19215857.4
(22) Anmeldetag: 12.12.2019
(51) Int. Cl.: B22C 9/04, B22D 29/00, B22D 30/00, B33Y 80/00

(54) **VERFAHREN UND GUSSFORM ZUM HERSTELLEN VON METALLGUSSWERKSTÜCKEN**
METHOD AND CASTING MOULD FOR MANUFACTURING METAL CAST WORKPIECES
PROCÉDÉ ET MOULE PERMETTANT DE FABRIQUER DES PIÈCES MOULÉES MÉTALLIQUES

(30) Priorität: 14.12.2018 DE 102018221750
(43) Veröffentlichungstag der Anmeldung: 17.06.2020
(73) Patentinhaber: Fraunhofer-Gesellschaft zur Förderung der angewandten Forschung e.V., 80686 München (DE)
(72) Erfinder: GÜNTHER, Daniel, 86159 Augsburg (DE); KLAN, Steffen, 86159 Augsburg (DE); VOLK, Wolfram, 86159 Augsburg (DE); SCHMID, Simon, 85356 Freising (DE)
(74) Vertreter: Pfenning, Meinig & Partner mbB

(56) Entgegenhaltungen:
- WO-A1-2004/007120
- US-A1- 2009 250 185
- US-A1- 2014 190 653
- BEELEY P R ET AL: "Investment Casting, passages", 1. Januar 1995 (1995-01-01), INVESTMENT CASTING, THE INSTITUTE OF METALS, LONDON, PAGE(S) 66 - 68, 89, XP002558778, ISBN: 978-0-901716-66-8 * Seite 105 - Seite 106 *

## Beschreibung

Die Erfindung liegt auf dem Gebiet des Maschinenbaus und konkret auf dem Gebiet der Gießereitechnik. Sie ist mit besonderem Vorteil bei der Herstellung von Metallgusswerkstücken einsetzbar.

In der Gießereitechnik sind seit vielen Jahren verschiedene Gießtechniken bekannt, die unterschiedliche Vor- und Nachteile sowie Einsatzmöglichkeiten haben. Beispielhaft sollen hier die Sandgussverfahren und die Kokillengussverfahren angeführt werden, mit denen Gusswerkstücke in großer Zahl und effizient hergestellt werden können. Dabei ist es mit diesen Verfahren schwierig, sehr komplexe Werkstücke herzustellen. Je komplizierter die Formen werden, umso mehr Kerne sind notwendig und umso komplizierter wird das Gießverfahren einschließlich der Entformung. Auf der anderen Seite sind mit diesen Verfahren durch eine rasche Abkühlung der Gusswerkstücke gute Metallgefüge erreichbar. Beispiele für Verfahren dieser Art sind in den Druckschriften US 2009/250185 A1, US 2014/190653 A1 und WO 2004/007120 A1 beschrieben.

Auf der anderen Seite sollen beispielhaft Feingussverfahren und Wachsausschmelzverfahren erwähnt werden, die komplexe Formgebungen in einfacher Weise erlauben. Diese Gussverfahren bringen jedoch oft mit sich, dass die Gusswerkstücke nur langsam abgekühlt werden können, so dass die erreichbaren Metallgefüge die Qualität der oben genannten Gussverfahren nicht erreichen.

Vor dem Hintergrund des Standes der Technik liegt der vorliegenden Erfindung die Aufgabe zugrunde, ein Verfahren zu entwickeln, das die Herstellung von Metallgusswerkstücken mit hoher Komplexität der Form erlaubt und gleichzeitig das Erreichen guter Gefügeeigenschaften ermöglicht.

Die Aufgabe wird mit den Merkmalen der Erfindung durch ein Verfahren gemäß Patentanspruch 1 gelöst. Die abhängigen Ansprüche zeigen mögliche Implementierungen eines solchen Verfahrens auf. Zudem bezieht sich die Erfindung auf eine Gussform gemäß Patentanspruch 7 zur Verwendung in dem Verfahren sowie auf eine Einrichtung gemäß Patentanspruch 9 zur Herstellung eines Metallgusswerkstücks.

Demgemäß bezieht sich die Erfindung auf ein Verfahren zum Herstellen von Metallgusswerkstücken, bei dem eine Metallschmelze in eine aus gebrannter Keramik bestehende Gussform gegossen wird, darauf nach Beginn der Erstarrung der Metallschmelze und noch während des Abkühlungsprozesses die Gussform wenigstens teilweise von dem Metallgusswerkstück entfernt wird und dadurch das Metallgusswerkstück mit einem die Form umgebenden, fließfähigen Kühlmedium in Kontakt gebracht wird, das dazu geeignet ist, dem Metallgusswerkstück Wärmeenergie schneller zu entziehen als die Gussform. Insbesondere wird die Gussform wenigstens teilweise entfernt, nachdem sich eine stabile oder selbsttragende Schicht von erstarrter Metallschmelze gebildet hat. Die Entfernung der Gussform kann weiter insbesondere erfolgen, bevor die Metallschmelze vollständig erstarrt ist.

Der Erfindung liegt der Gedanke zugrunde, dass zunächst das Metallgusswerkstück durch Eingießen der Metallschmelze in eine Gussform seine Form erhält, dass darauf jedoch möglichst bald nicht nur die Abkühlung der Metallschmelze oder des erstarrten Werkstücks über die Gussform erfolgt, sondern die Gussform wenigstens teilweise entfernt wird, so dass eine weitere und intensive Abkühlung des Werkstücks durch ein fließfähiges Kühlmedium erfolgt, da durch das Entfernen der Gussform oder eines Teils der Gussform das Werkstück mit dem Medium in Kontakt kommt. Das Medium ist zu diesem Zweck so ausgewählt, dass es dem Metallgusswerkstück die Wärmeenergie schneller entzieht als die Gussform. Hierzu kann das Material des Mediums geeignet gewählt und temperiert sein, wie weiter unten noch näher erläutert wird.

Für das möglichst schlagartige Entfernen eines Teils der Gussform oder der gesamten Gussform von einem anfänglich erstarrten Metallgusswerkstück können verschiedene Mechanismen in Erwägung gezogen werden. Beispielsweise kann die Gussform federbelastet sein und entriegelt werden, so dass sie durch eine Federkraft aufschnappt, oder sie kann mit einer Sprengladung versehen sein, um sie möglichst schnell von dem Werkstück zu entfernen.

Es sind jedoch auch einfachere Mechanismen denkbar, durch die die Gussform zerbrochen wird, beispielsweise dadurch, dass die Gussform gemeinsam mit der eingegossenen Metallschmelze während der Abkühlung der Metallschmelze in das Kühlmedium eingebracht wird. Hierzu kann eine geeignete Temperatur des Kühlmediums eingestellt werden, das vorteilhaft wesentlich kälter ist als die Metallschmelze oder als das Metallgusswerkstück zu dem Zeitpunkt, zu dem die Gussform in das Kühlmedium eingebracht wird. Das Material der Gussform kann so gewählt und die Wandstärke so eingestellt werden, dass die Gussform beim Einbringen des Kühlmediums durch thermische Spannungen zerbricht. In diesem Fall kann durch Wegbrechen von kleineren oder größeren Teilen der Gussform das Kühlmedium unmittelbar an das Metallgusswerkstück gelangen und dies in der Folge schneller abkühlen, als die Gussform dies bei bleibendem Kontakt mit dem Werkstück erreicht hätte.

Um das Zerbrechen durch thermische Spannungen in der Gussform zu fördern, kann beispielsweise vorgesehen sein, dass das Kühlmedium einen geringeren spezifischen Wärmewiderstand und/oder eine höhere spezifische Wärmekapazität hat als das Material der Gussform und/oder dass das Kühlmedium zu dem Zeitpunkt des ersten Kontaktes mit der Gussform wenigstens 400 Grad kälter ist als das Metallgusswerkstück.

Es kann zudem vorgesehen sein, dass die Gussform vor und/oder während des Eingießens der Metallschmelze beheizt wird. Hierdurch können die Vorteile einer beheizten Gussform für das Erreichen von komplexen Formen des Metallgusswerkstücks optimal genutzt und mit den Vorteilen einer schnellen Abkühlung kombiniert werden.

Es kann weiter vorgesehen sein, dass als Kühlmedium ein Fluid, insbesondere eine Flüssigkeit, weiter insbesondere Wasser, verwendet wird. Grundsätzlich kann für das rasche Abkühlen des Werkstücks auch die Verwendung eines kalten Gases oder einer anderen Flüssigkeit als Wasser, wie beispielsweise Öl oder Quecksilber, in Frage kommen. Prozesstechnisch hat die Verwendung von Wasser wegen der Verfügbarkeit, des einfachen Handlings und der hohen Wärmekapazität Vorteile.

Wie bereits oben erläutert, kann vorteilhaft vorgesehen sein, dass die Temperatur des Kühlmediums vor dem Kontakt mit der Gussform und der Zeitpunkt des ersten Kontaktes der Gussform mit dem Kühlmedium derart gewählt wird, dass die Gussform beim Kontakt mit dem Kühlmedium wenigstens teilweise durch sprunghafte Abkühlung zerbricht. Es kann jedoch auch bei der Verwendung eines Fluids vorgesehen sein, dass die Gussform selbst nicht durch thermische Spannungen zerbricht, sondern durch andere Effekte, wie Federkraft oder Sprengwirkung, entfernt wird. Auch in diesem Fall ist die Verwendung beispielsweise von Wasser als Kühlmedium von großem Vorteil.

Die Erfindung bezieht sich außer auf ein Verfahren der oben erläuterten Art auch auf eine Gussform, die insbesondere durch das Verfahren gemäß einem der Ansprüche 1 bis 6 hergestellt sein kann, zur Verwendung bei einem Metallgussverfahren. Die Gussform besteht aus einer gebrannten Keramik. Ferner weist die Gussform eine oder mehrere Sollbruchstellen auf, die durch Ausnehmungen und/oder Kerben gebildet sind. Durch eine derartige Vorbereitung der Gussform wird das Zerbrechen der Gussform während des Erstarrungsprozesses des Werkstücks besser steuerbar. Dies gilt für die verschiedenen Ausgestaltungen des Verfahrens zum Zerbrechen der

Gussform, jedoch in besonderer Weise für das Zerbrechen durch das Einbringen von thermischen Spannungen.

Zudem bezieht sich die Erfindung auf eine Gussform, die durch das oben beschriebene Verfahren herstellt sein kann, und zusätzlich oder alternativ auf ein Verfahren zur Herstellung einer Gussform zur Verwendung in einem Verfahren gemäß einem der Ansprüche 1 bis 6, wobei die Gussform und/oder das Verfahren dadurch gekennzeichnet ist, dass ein Positiv-Modell erzeugt wird und dass danach das Positiv-Modell mit einer oder mehreren Schichten eines flüssigen keramischen Schlickers bedeckt wird, wobei das Positiv-Modell vor dem Aufbringen und/oder im Wechsel mit dem Aufbringen und Trocknen von Schlickerschichten jeweils stellenweise mit einer hydrophoben Substanz bedeckt wird. Durch das gezielte Aufbringen von hydrophoben Substanzen wird die Haftung des Schlickers an dem Positiv-Modell so gesteuert, dass sich Schwächungen der Gussform ausbilden.

Die Erfindung bezieht sich außerdem auf eine Gussform, die durch das oben beschriebene Verfahren herstellt sein kann , und zusätzlich oder alternativ auf ein Verfahren zur Herstellung einer Gussform zur Verwendung in einem Verfahren der oben erläuterten Art, bei der und/oder bei dem ein Positiv-Modell erzeugt wird und danach das Positiv-Modell mit einer oder mehreren Schichten eines flüssigen keramischen Schlickers bedeckt wird, wobei der getrocknete oder gebrannte Schlickerkörper durch ein abtragendes, insbesondere spanendes Verfahren mit Ausnehmungen und/oder Kerben zur Erzeugung von Sollbruchstellen versehen wird.

Letztlich bezieht sich die Erfindung auch auf eine Einrichtung zur Herstellung eines Metallgusswerkstücks, mit einer Einrichtung zum Schmelzen von Metall, einer Gussform sowie einer Einrichtung zum sprunghaften Abkühlen der Gussform und des Metallgusswerkstücks, insbesondere mittels Wassers.

Die Einrichtung zur Herstellung des Metallgusswerkstücks umfasst die Gussform der oben erläuterten Art. Eine solche Einrichtung sieht eine geeignete Gussform vor, die, wie weiter oben beschrieben, beispielsweise Sollbruchstellen aufweisen kann. Die Einrichtung kann zudem eine Beheizungseinrichtung für die Gussform aufweisen, sowie einen Behälter, in dem die Gussform gehalten wird und in den mit ausreichender Geschwindigkeit Wasser, insbesondere gekühltes Wasser, eingebracht werden kann. Hierzu ist eine Wasserversorgung mit ausreichender Kapazität vorzusehen.

In einer anderen Ausprägung der Erfindung kann auch die Gussform so angeordnet sein, dass sie während des Erstarrens oder kurz nach dem Erstarren des Metallgusswerkstücks bewegt werden und zu einem Wasserreservoir befördert werden kann, in dem die Gussform dann schnell abkühlen kann.

Im Folgenden wird die Erfindung anhand von Figuren gezeigt und nachfolgend erläutert. Dabei zeigen
- Fig. 1-7: ein konventionelles Feingussverfahren in verschiedenen Prozessschritten,
- Fig. 8-11: ein Verfahren zur Erzeugung einer schalenförmigen Gussform durch plastische Formgebung,
- Fig. 12-14: schematisch ein Verfahren zur Erzeugung eines Formkörpers mittels eines 3D-Druckverfahrens,
- Fig. 15-17: die Erzeugung einer Gussform mit Sollbruchstellen mithilfe eines Modellkörpers in einem Beschichtungsverfahren sowie
- Fig. 18-20: den Prozess zur Entfernung einer Gussform und zur Abkühlung eines Metallgusskörpers.

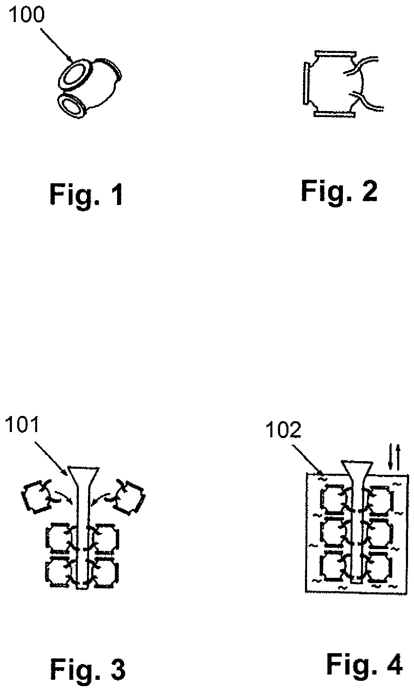

In Figur 1 ist ein Wachsmodell 100 für ein herzustellendes Metallgusswerkstück schematisch dargestellt. In Figur 2 ist das Wachsmodell mit einem Angusssystem gezeigt.

Figur 3 zeigt die Anordnung mehrerer gleichartiger Wachsmodelle in einer Gusstraube 101. Die Gusstraube wird nach ihrer Herstellung, wie aus Figur 4 ersichtlich ist, mehrmals in ein Schlickerbad 102 getaucht und zwischenzeitlich getrocknet und dabei gegebenenfalls auch erhitzt.

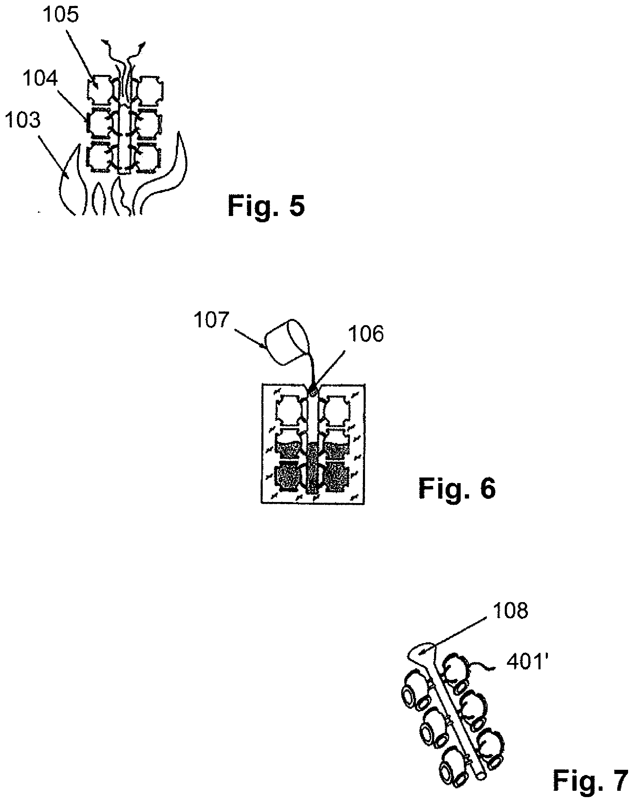

Figur 5 zeigt den Brennvorgang, in dem nach dem Aufbringen ausreichend dicker Schlickerschichten die Wachsmodelle durch Erhitzen ausgebrannt und ausgeschmolzen werden, so dass diese in den Schlickerkörpern entsprechend geformte Hohlräume 105 hinterlassen. Gleichzeitig kann die Schlickermasse zu einer Keramikform gebrannt werden. In Figur 5 ist im unteren Bereich mit 104 ein noch verbleibendes Wachsmodell dargestellt, das vor dem Ausschmelzen steht. Mit 103 ist in der Figur eine Einrichtung zur Beheizung der Gusstraube mit den Schlickerschichten bezeichnet.

Nach dem Ausbrennen der Wachsmodelle verbleibt eine Anordnung von Gussformen, die aus den verbliebenen und gebrannten Schlickerschichten bestehen. Diese können, wie in Figur 6 gezeigt ist, mittels eines Angusssystems mit flüssigem Metall 106 beschickt werden, das in einer Einrichtung 107 zum Schmelzen von Metall erhitzt worden ist.

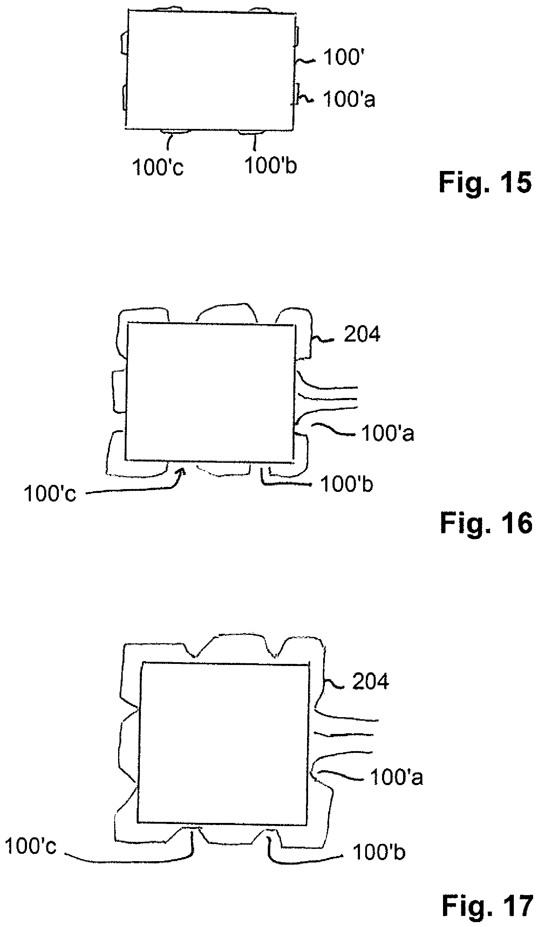

In Figur 7 ist ein Gusswerkstück 108 gezeigt, das als fertiges Metallteil aus den Keramikformen herausgelöst wird und von dem die einzelnen Metallgusswerkstücke 401', die die Form des Wachsmodells 100 aufweisen, gelöst werden können. Weiter unten ist anhand der Figuren 15 bis 17 dargestellt, wie bei einem solchen Verfahren zur Herstellung von Schlickerformen Sollbruchstellen in die Formen eingebracht werden können.

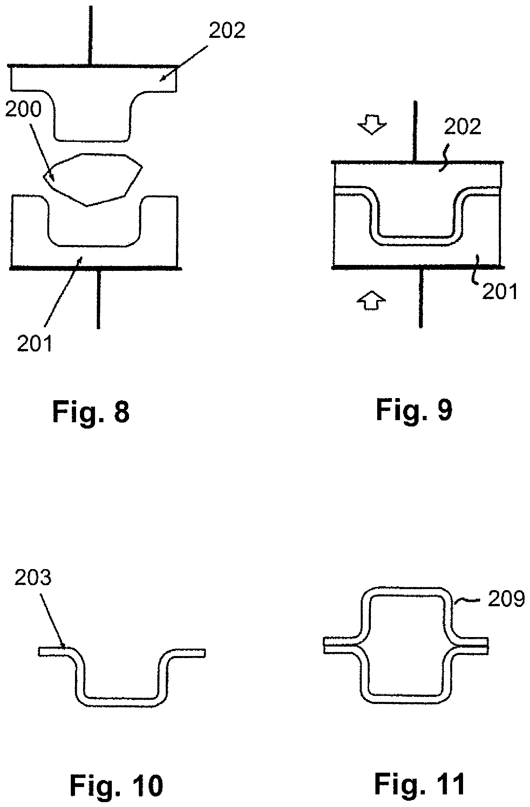

In den Figuren 8 bis 11 ist ein Verfahren zur Herstellung von Gussformen mittels plastischer Verformung dargestellt. Mit 200 ist in Figur 8 ein plastisch verformbares Keramikmaterial oder ein sonstiges wärmebeständiges Material bezeichnet, das zwischen zwei Formwerkzeugen, einem Unterteil 201 und einem Oberteil 202, dargestellt ist. Das plastische Keramikmaterial 200 wird, wie in Figur 9 dargestellt ist, zwischen den Teilen des Formwerkzeugs 201, 202 gepresst und in eine Zielform gebracht, die in Figur 10 dargestellt und mit 203 bezeichnet ist. Das Teil 203 stellt eine Hälfte einer Gussform dar. In Figur 11 ist eine komplette Gussform dargestellt, die aus zwei Teilen 203 besteht. Die Gussform ist in Figur 11 vereinfacht dargestellt und soll zur Herstellung eines beispielhaften einfachen quaderförmigen Körpers dienen.

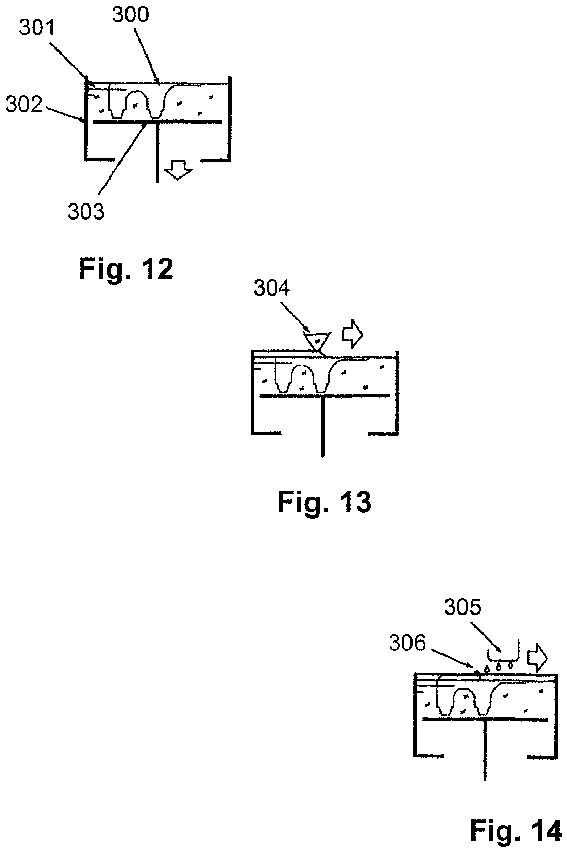

In den Figuren 12 bis 14 ist ein 3D-Druckverfahren für Keramik-Gussformen dargestellt, bei dem innerhalb eines Baubehälters 302 auf einer Bauplattform 303 sukzessive Schichten 301 eines zu formenden keramischen Formteils 300 aufgeschichtet werden. Nach Aufbringen jeweils einer Schicht 301 mittels eines Beschichters 304 kann selektiv ein Teil der letzten Schicht mittels eines Druckkopfes 305 mit einem Bindemittel 306 versehen werden. Die mit dem Bindemittel 306 versehenen Bereiche der Schicht können durch Trocknen oder Brennen ausgehärtet und somit verfestigt werden. Andere Bereiche der Schicht 301, die nicht mit einem Bindemittel 306 in Berührung kommen, werden später durch Schütteln oder andere Methoden abgeführt und von den verfestigten Bereichen getrennt. Auf diese Weise werden dreidimensionale Formen fast beliebiger Art ermöglicht. Zum Einbringen von Sollbruchstellen kommt besonders die Erzeugung von Kerben oder Materialschwächungen in verschiedenen Bereichen der Gussform in Frage.

In den Figuren 15 bis 17 ist gezeigt, wie bei einem Schlickerbeschichtungsverfahren zur Herstellung einer Keramik-Gussform die Dicke der aufgebrachten Schlickerschicht variiert und damit verdünnte Bereiche der Schlickerschicht an der Gussform erzeugt werden können. In Figur 15 ist gezeigt, dass ein Wachsmodell 100' in Form eines Quaders in den Bereichen 100'a, 100'b, 100'c mit einem hydrophoben Material beschichtet wird. Dies hat zur Folge, dass beim Eintauchen des Modellkörpers 100' in den wässrigen Schlicker dieser in den Bereichen 100'a, 100'b, 100'c nicht an dem Modellkörper 100' anhaftet. In den übrigen Bereichen der Oberfläche des Modellkörpers 100' haftet der Schlicker an und trocknet nach dem Entfernen des Modellkörpers aus dem Schlickerbad an. Daraufhin kann der Modellkörper 100' ein oder mehrere wiederholte Male in das Schlickerbad eingetaucht werden, so dass die Schlickerschichten mit wachsender Dicke aufgebaut werden. In dem Bereich des Modellkörpers, der mit einer hydrophoben Substanz beschichtet ist, haften die Schlickerschichten signifikant schlechter an, so dass die entstehende Schlickerschicht dünner ist als in den nicht mit einer hydrophoben Substanz beschichteten Bereichen. Die Beschichtung mit einer hydrophoben Substanz kann während der Wiederholung des Tauchvorgangs in dem Schlickerbad ein oder mehrere Male wiederholt werden. Im Ergebnis zeigt sich in Figur 17 ein Schlickerkörper, der den Modellkörper 100' umgibt und der in den Bereichen 100'a, 100'b, 100'c dünnwandige Stellen aufweist, die als Sollbruchstellen des Schlickerkörpers fungieren. Wird der Modellkörper 100' ausgeschmolzen, so wird der Schlickerkörper zu einer Gussform mit Sollbruchstellen gebrannt.

Bei den in den Figuren 8 bis 11 gezeigten Herstellungsart für eine Gussform können Sollbruchstellen beispielsweise bereits in die Formwerkzeuge 202, 201 mit eingearbeitet sein, indem die Formgebung der Formwerkzeuge Materialausnehmungen an den gewünschten Sollbruchstellen vorsieht. Auch beim Herstellen einer Gussform mittels eines 3D-Druckverfahrens können Sollbruchstellen an gewünschten Stellen der Gussform durch geeignete Gestaltung der Gussform vorgesehen werden.

Ist auf die eine oder andere Art eine Gussform mit Sollbruchstellen hergestellt worden, so kann diese für das erfindungsgemäße Verfahren zur Herstellung eines Metallgusswerkstücks verwendet werden. Dazu wird zunächst die Form 204 über ein nicht näher dargestelltes Angusssystem mit einer Metallschmelze gefüllt, so dass ein Metallgusskörper 401 entsteht. Die Form 204 ist mit Sollbruchstellen versehen, von denen eine mit dem Bezugszeichen 400 bezeichnet ist. Mit dem Bezugszeichen 600 ist ein Bereich bezeichnet, in dem eine besonders hohe Dichte von Sollbruchstellen vorgesehen ist. Auf diese Weise kann durch die vorgesehene Dichte von Sollbruchstellen gesteuert werden, in welchen Bereichen einer Gussform zuerst Sollbruchstellen brechen. Nach einem anfänglichen Erstarren der Metallschmelze zu dem Metallgusskörper 401 wird die Form 204 mit dem in ihr befindlichen Metallgusskörper 401 in eine Flüssigkeit 500, insbesondere Wasser, eingetaucht. Da das Wasser eine Temperatur aufweist, die wesentlich niedriger ist als die Temperatur der Form 204 nach dem Gießvorgang, springt die Form 204 durch thermische Spannungen im Bereich der Sollbruchstellen. Hierdurch werden Teile 502 der Gussform entfernt, und der Metallgusskörper 401 wird unmittelbar dem Kontakt mit der Flüssigkeit 500 ausgesetzt und hierdurch schlagartig abgekühlt. Dadurch ergibt sich ein optimiertes Gefüge, das gegenüber dem Produkt eines langsamen Abkühlvorgangs innerhalb der Form 204 beträchtlich verbessert ist.

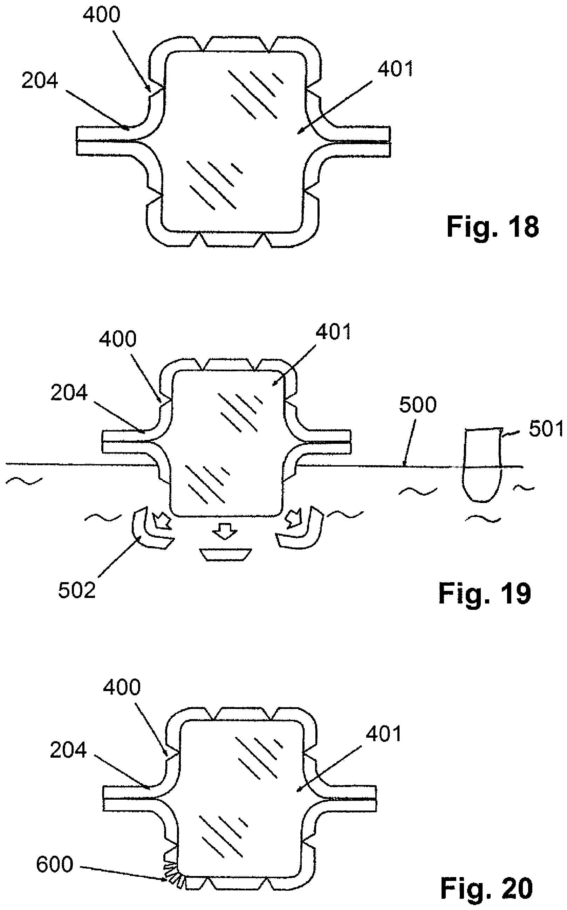

In Figur 20 ist der Bereich 600 mit einer erhöhten Dichte von Sollbruchstellen dargestellt, die dazu führt, dass in diesem Bereich beim Einbringen der Form 204 in Wasser die Gussform mit der größten Wahrscheinlichkeit bricht. Mit 501 ist eine Einrichtung zur Regelung der Temperatur der Flüssigkeit, insbesondere des Wassers, bezeichnet. Anstelle des Wassers 500 können auch andere fließfähige Stoffe gewählt werden, wie andere Flüssigkeiten oder sogar Granulate oder Pulver, beispielsweise aus Metall. In Sonderfällen kann beispielsweise auch ein flüssiges Metall wie Quecksilber gewählt werden, das bei heißen Formen gut zur Abkühlung geeignet sein kann. Beim Eintauchen in Wasser können sich bei zu großen Temperaturunterschieden isolierende Dampfschichten um die abzukühlende Form 204 herum oder um den abzukühlenden Metallgusskörper 401 herum bilden, die die weitere Abkühlung verlangsamen. Dieser Effekt ist bei der Verwendung von Quecksilber oder einem Metallgranulat oder -pulver nicht zu erwarten.

Mit der Erfindung und dem erfindungsgemäßen Verfahren lassen sich auch in Feingussformen durch rasche Abkühlung gute metallische Gefüge bei Metallgusskörpern erzielen.

## Patentansprüche

1. Verfahren zum Herstellen von Metallgusswerkstücken (401, 401'), bei dem eine Metallschmelze in eine aus gebrannter Keramik bestehende Gussform (204, 209) gegossen wird, darauf nach Beginn der Erstarrung der Metallschmelze und noch während des Abkühlungsprozesses die Gussform (204, 209) wenigstens teilweise von dem Metallgusswerkstück entfernt wird und dadurch das Metallgusswerkstück mit einem die Form umgebenden, fließfähigen Kühlmedium (500) in Kontakt gebracht wird, das derart eingerichtet ist, dass es dem Metallgusswerkstück Wärmeenergie schneller entzieht als die Gussform (204, 209).

2. Verfahren nach Anspruch 1, **dadurch gekennzeichnet, dass** die Gussform (204, 209) gemeinsam mit der eingegossenen Metallschmelze während der Abkühlung der Metallschmelze in das Kühlmedium (500) eingebracht wird.

3. Verfahren nach Anspruch 1 oder 2, **dadurch gekennzeichnet, dass** das Kühlmedium (500) einen geringeren spezifischen Wärmewiderstand und/oder eine höhere spezifische Wärmekapazität hat als das Material der Gussform (204, 209).

4. Verfahren nach Anspruch 1, 2 oder 3, **dadurch gekennzeichnet, dass** die Gussform (204, 209) vor und/oder während des Eingießens der Metallschmelze beheizt wird.

5. Verfahren nach Anspruch 1, 2, 3 oder 4, **dadurch gekennzeichnet, dass** als Kühlmedium (500) ein Fluid, insbesondere eine Flüssigkeit, weiter insbesondere Wasser, verwendet wird.

6. Verfahren nach einem der Ansprüche 1 bis 5, **dadurch gekennzeichnet, dass** die Temperatur des Kühlmediums (500) vor dem Kontakt mit der Gussform (204, 209) und der Zeitpunkt des ersten Kontaktes der Gussform (204, 209) mit dem Kühlmedium derart gewählt wird, dass die Gussform beim Kontakt mit dem Kühlmedium wenigstens teilweise durch sprunghafte Abkühlung zerbricht.

7. Gussform (204, 209) zur Verwendung in dem Verfahren nach einem der Ansprüche 1 bis 6, wobei die Gussform (204, 209) aus einer gebrannten Keramik besteht, **gekennzeichnet durch** eine oder mehrere Sollbruchstellen (100'a, 100'b, 100'c, 400, 600), die durch Ausnehmungen und/oder Kerben gebildet sind.

8. Gussform (204, 209) nach Anspruch 7, **dadurch gekennzeichnet, dass** ein Positiv-Modell (100, 100') erzeugt wird und dass danach das Positiv-Modell (100, 100') mit einer oder mehreren Schichten eines flüssigen keramischen Schlickers bedeckt wird,
(i) wobei das Positiv-Modell (100, 100') vor dem Aufbringen und/oder im Wechsel mit dem Aufbringen und Trocknen von Schlickerschichten jeweils stellenweise mit einer hydrophoben Substanz bedeckt wird oder
(ii) wobei der getrocknete oder gebrannte Schlickerkörper durch ein abtragendes, insbesondere spanendes Verfahren mit Ausnehmungen und/oder Kerben zur Erzeugung von Sollbruchstellen (100'a, 100'b, 100'c, 400, 600) versehen wird.

9. Einrichtung zur Herstellung eines Metallgusswerkstücks (401, 401'), umfassend:
eine Einrichtung (107) zum Schmelzen von Metall,
eine Gussform (204, 209) nach einem der Ansprüche 7 oder 8 sowie
eine Einrichtung zum sprunghaften Abkühlen der Gussform (204, 209) und des Metallgusswerkstücks (401, 401'), insbesondere mittels Wassers.

## Claims

1. A method for producing metal casting workpieces (401, 401'), in which molten metal is poured into a casting mold (204, 209) made of fired ceramic, then, after the molten metal has started to solidify and still during the cooling process, the casting mold (204, 209) is at least partially removed from the metal casting workpiece and thereby bringing the metal casting workpiece into contact with a flowable cooling medium (500) surrounding the mold, the cooling medium being configured such that it extracts heat energy from the metal casting workpiece faster than the casting mold (204, 209).

2. The method according to claim 1, **characterized in that** the casting mold (204, 209) is introduced into the cooling medium (500) together with the poured molten metal while the molten metal is cooling.

3. The method according to claim 1 or 2, **characterized in that** the cooling medium (500) has a lower specific heat resistance and/or a higher specific heat capacity than the material of the casting mold (204, 209).

4. The method according to claim 1, 2 or 3, **characterized in that** the casting mold (204, 209) is heated before and/or during the pouring of the molten metal.

5. The method according to claim 1, 2, 3 or 4, **characterized in that** a fluid, in particular a liquid, more particularly water, is used as the cooling medium (500).

6. The method according to any one of claims 1 to 5, **characterized in that** the temperature of the cooling medium (500) before contact with the casting mold (204, 209) and the time of the first contact of the casting mold (204, 209) with the cooling medium is selected such that the casting mold breaks at least partially due to sudden cooling when coming into contact with the cooling medium.

7. A casting mold (204, 209) for use in the method according to any one of claims 1 to 6, the casting mold (204, 209) consisting of a fired ceramic, **characterized by** one or more predetermined breaking points (100'a, 100'b, 100'c, 400, 600) formed by recesses and/or notches.

8. The casting mold (204, 209) according to claim 7, **characterized in that** a positive model (100, 100') is produced and that the positive model (100, 100') is then covered with one or more layers of a liquid ceramic slip,
(i) wherein the positive model (100, 100') is covered in places with a hydrophobic substance before the application and/or alternately with the application and drying of slip layers, or
(ii) wherein the dried or fired body of slip is provided with recesses and/or notches for producing predetermined breaking points (100'a, 100'b, 100'c, 400, 600) by a removing, in particular machining process.

9. A device for producing a metal casting workpiece (401, 401'), comprising:
a device (107) for melting metal,
a casting mold (204, 209) according to any one of claims 7 or 8 and a device for rapid cooling of the casting mold (204, 209) and the metal casting workpiece (401, 401'), in particular by means of water.

## Revendications

1. Procédé de fabrication de pièces en métal coulé (401, 401'), chez lequel un métal en fusion est versé dans un moule (204, 209) constitué d'une céramique au four, ensuite, après le début du figeage du métal fondu, et pendant le processus de refroidissement, le moule (204, 209) est retiré au moins partiellement de la pièce en métal coulé et ainsi la pièce en métal coulé est mise en contact avec un milieu de refroidissement (500) entourant le moule et susceptible de s'écouler qui est conçu de telle manière qu'il prélève de l'énergie thermique à partir de la pièce en métal coulé plus rapidement que le moule (204, 209).

2. Procédé selon la revendication 1, **caractérisé en ce que** le moule (204, 209) est déposé dans le milieu de refroidissement (500) conjointement avec le métal fondu versé pendant le refroidissement du métal en fusion.

3. Procédé selon la revendication 1 ou la revendication 2, **caractérisé en ce que** le milieu de refroidissement (500) possède une résistance thermique spécifique plus faible et/ou une capacité thermique massique plus élevée que le matériau du moule (204, 209).

4. Procédé selon la revendication 1, la revendication 2 ou la revendication 3, **caractérisé en ce que** le moule (204, 209) est chauffé avant et/ou pendant la coulée du métal en fusion.

5. Procédé selon la revendication 1, la revendication 2, la revendication 3 ou la revendication 4, **caractérisé en ce qu'**un fluide, notamment un liquide, plus préférentiellement de l'eau, est employé en tant que milieu de refroidissement (500).

6. Procédé selon l'une des revendications 1 à 5, **caractérisé en ce que** la température du milieu de refroidissement (500) avant le contact avec le moule (204, 209) et le moment du premier contact du moule (204, 209) avec le milieu de refroidissement sont choisis de telle manière que le moule se casse au moins partiellement du fait du refroidissement brusque lors du contact avec le milieu de refroidissement.

7. Moule (204, 209) destiné à l'emploi dans le procédé selon l'une des revendications 1 à 6, où le moule (204, 209) est constitué d'une céramique au four, **caractérisé par** un ou plusieurs points de rupture souhaitée (100'a, 100'b, 100'c, 400, 600), qui sont formés par des cavités et/ou des encoches.

8. Moule (204, 209) selon la revendication 7, **caractérisé en ce qu'**un modèle positif (100,100') est créé et qu'ensuite le modèle positif (100,100') est recouvert avec une ou plusieurs couches de barbotine de céramique liquide,
(i) dans lequel le modèle positif (100, 100') est recouvert respectivement par endroits avec une substance hydrophobe avant l'application et/ou dans l'intervalle entre l'application et le séchage des couches de barbotine, ou
(ii) dans lequel le corps en barbotine séché ou au four est muni de cavités et/ou d'encoches par un procédé de retrait de matière notamment par copeaux pour la création de points de rupture souhaitée (100'a, 100'b, 100'c, 400, 600).

9. Installation de fabrication d'une pièce en métal coulé (401, 401'), comprenant :
une installation (107) permettant la fusion du métal,
un moule (204, 209) selon l'une des revendications 7 ou 8 ainsi qu'une installation pour un refroidissement brusque du moule (204, 209) et de la pièce en métal coulé (401, 401'), en particulier, au moyen d'eau.
